# EUROPÄISCHE PATENTSCHRIFT

(11) **EP 2 381 132 B1**
(45) Veröffentlichungstag und Bekanntmachung des Hinweises auf die Patenterteilung: **15.05.2019**
(21) Anmeldenummer: 11158119.5
(22) Anmeldetag: 14.03.2011
(51) Int. Cl.: F16H 25/06

(54) **Getriebe**
Gearing
Transmission

(30) Priorität: 22.04.2010 DE 102010016581
(43) Veröffentlichungstag der Anmeldung: 26.10.2011
(73) Patentinhaber: WITTENSTEIN SE, 97999 Igersheim (DE)
(72) Erfinder: Michel, Frank, 33034, Brakel (DE); Schmidt, Michael, 97234, Reichenberg (DE); Bayer, Thomas, 97999, Igersheim (DE); Schreiber, Heiko, 02692, Doberschau (DE); Estermann, Lars, 97990, Weikersheim (DE)
(74) Vertreter: Zimmermann & Partner Patentanwälte mbB

(56) Entgegenhaltungen:
- DE-A1- 3 906 053
- DE-A1-102006 042 786
- DE-A1-102007 016 189

## Beschreibung

### Gebiet der Erfindung

Die Erfindung betrifft ein Getriebe nach dem Oberbegriff des Anspruchs 1.

### Stand der Technik

Aus dem Stand der Technik sind Getriebe bekannt, welche durch ein selektives Eingreifen von Zähnen eines Zahnkranzes in eine Innenverzahnung in einer einzigen Stufe hohe Übersetzungsverhältnisse von beispielsweise 1 zu 50 oder 1 zu 100 erreichen. Ein Beispiel für ein solches Getriebe ist das in der DE 10 2006 042 786 B4 offenbarte. Ausserdem sind unter der Bezeichnung "Harmonic Drive" Getriebe bekannt geworden, welche ähnlich wie das in der DE 10 2006 042 786 B4 offenbarte Getriebe aufgebaut sind, allerdings weisen die Harmonic Drive-Getriebe flexible Zahnkränze und nicht einzelne, getrennt voneinander bewegliche Zähne auf.

Getriebe mit einzeln, unabhängig voneinander beweglichen Zähnen haben den Vorteil, dass hohe Drehmomente übertragen werden können, da die Zähne nicht wie bei den Harmonic Drive-Getrieben aus einem flexiblen Material hergestellt sein müssen. Allerdings stößt auch eine Drehmomentübertragung mit einzelnen stabilen Zähnen an Grenzen, insbesondere aufgrund der Tatsache, dass immer nur jeweils eine sehr begrenzte Anzahl von Zähnen in einem aktiven Eingriff zur Drehmomentübertragung mit einer Innenverzahnung eines Hohlrades steht.

Die DE 10 2007 016 189 A1 und die DE 34 10 53 zeigen Getriebe mit beweglichen Zähnen. Die DE 39 06 053 A1 zeigt ein Getriebe mit kreisrunden Wälzkörpern als Eingriffskörpern. Die DE 2 310 751 A1 zeigt eine parallele Kraftübertragung mittels Kugeln.

Eine Möglichkeit, die übertragbaren Momente zu vergrößern, ist, den Durchmesser des Hohlrades und damit des Getriebes zu vergrößern. Eine weitere Möglichkeit ist, die Breite der Zähne, d. h. die Ausdehnung der Zähne in Achsrichtung des Hohlrads oder des Getriebes, zu verlängern. Eine Vergrößerung des Durchmessers ist nicht für alle Getriebe auf Grund der Einbaumöglichkeiten sinnvoll. Ebenso ist auch eine Verbreiterung der Zähne nur begrenzt möglich.

Im Rahmen der Erfindung werden Ausführungen bevorzugt, bei welchen mehrere Zahnkränze vorgesehen sind. Dabei kann allerdings wiederum das Problem auftreten, dass aufgrund einer Torsion von Teilen des Getriebes die einzelnen Zahnkränze unterschiedlich belastet werden, so dass die Grenzlast des Getriebes, d. h. das größtmögliche zu übertragende Drehmoment, von dem dann am stärksten belasteten Zahnkranz bestimmt wird. Dies ist ineffektiv.

### Offenbarung der Erfindung

Aufgabe der Erfindung ist es, ein Getriebe anzugeben, mit welchem die Nachteile des Standes der Technik behoben oder zumindest gelindert werden. Insbesondere ist es Aufgabe der Erfindung, ein Getriebe mit einem großen Übersetzungsverhältnis anzugeben, welches bei einem geringen Durchmesser große Drehmomente übertragen kann.

Die Aufgabe wird mit einem Getriebe gemäß Anspruch 1 gelöst.

Das erfindungsgemässe Getriebe weist eine koaxiale Bauform eines Hohlrads und einer Innenwelle auf, wobei auf der Innenwelle zumindest zwei, bevorzugt zumindest drei oder zumindest fünf Kurvenscheiben angeordnet sind. Von dieser Formulierung ist auch umfasst, dass die Innenwelle zusammen mit den Kurvenscheiben einteilig ausgebildet ist. Auf den Kurvenscheiben ist vorzugsweise ein Lagermittel angeordnet, welches dazu geeignet ist, eine Reibung zwischen den Zähnen und der Kurvenscheibe zu verringern. Beispielsweise kann auf der Kurvenscheibe eine Vielzahl von Walzen angeordnet sein, welche wiederum einen flexiblen Ring tragen. Auf diesem flexiblen Ring in Richtung radial nach außen sind die Zähne angeordnet. Bevorzugt sind die Zähne in Teilgruppen, besonders bevorzugt einzeln radial beweglich gelagert, wobei die Zähne vorzugsweise starr ausgeführt sind. Ausdrücklich umfasst von der Erfindung sind Getriebe, die mehr als zwei, bevorzugt mehr als drei oder noch bevorzugter mindestens fünf Zahnkränze und Kurvenscheiben aufweisen.

Typische Ausführungsformen sind als einstufiges Getriebe ausgebildet. Dabei bedeutet einstufig vorzugsweise, dass genau eine Stufe mit einer Mehrzahl von Kurvenscheiben auf genau einer Innenwelle vorhanden ist. An diese eine Stufe mit Kurvenscheiben können sich vorteilhafterweise noch andere Getriebe, wie beispielsweise ein Planetengetriebe, in demselben Gehäuse oder in weiteren Gehäusen anschließen. Einstufige Getriebe zeichnen sich bei weiteren typischen Ausführungsformen insbesondere dadurch aus, dass innerhalb eines Gehäuses lediglich genau eine Innenwelle mit darauf angeordneten Kurvenscheiben vorhanden ist. Bei einstufigen Getrieben stellt sich bei einer Anforderung, das Getriebe möglichst für große Drehmomente bei geringem Durchmesser zu dimensionieren, in besonderer Weise das Problem der Lastaufteilung bei Torsionsverformung der Bauteile des Getriebes unter Last. Das Lastaufteilungsmittel ist vorzugsweise geeignet, einer ungleichmäßigen Lastaufteilung auf Grund einer Torsionsverformung unter Last entgegenzuwirken.

Bei typischen Ausführungsformen sind zumindest zwei der Kurvenscheiben einstückig ausgebildet. Die einstückig zusammengesetzten Kurvenscheiben können eine identische oder unterschiedliche Winkellagen aufweisen. Eine einstückige Kurvenscheibe, welche auf eine Mehrzahl von Zahnkränzen wirkt, bietet den Vorteil eines einfachen Aufbaus.

Vorzugsweise sind die Zähne der Zahnkränze durch einen Zahnträger gekoppelt. Besonders bevorzugt wird, dass die Zähne zumindest von einer Teilmenge der Zahnkränze genau durch einen Zahnträger gekoppelt sind. Dies bietet den Vorteil, dass über die Zahnkränze übertragene Momente auf einen einzelnen Zahnträger geleitet werden. Dadurch ist es möglich, mit der Mehrzahl der Zahnkränze ein großes Drehmoment zu übertragen.

Die Innenwelle ist einteilig oder mehrteilig, wobei bei einer mehrteiligen Innenwelle zwischen den einzelnen Wellensegmenten vorzugsweise Gelenke angeordnet sind, um eine größere Krümmung oder Knicke der Innenwelle zu ermöglichen. Das Hohlrad ist vorzugsweise einteilig oder vorzugsweise mehrteilig, wobei bei einer mehrteiligen Ausführung des Hohlrads die mehreren Teile des Hohlrads vorzugsweise gekoppelt oder verbunden sind. "Gekoppelt" bedeutet in dieser Anmeldung vorzugsweise, dass die entsprechenden Teile bezüglich einer Verdrehung um die Achse des Getriebes, d. h. die Rotationssymetrieachse des Hohlrads oder die Rotationssymetrieachse der Innenwelle, zur Drehmomentübertragung von Drehmomenten um diese Achse gekoppelt sind.

Bevorzugte Ausführungsformen der Erfindung umfassen ein Lastaufteilungsmittel zum Aufteilen eines über die Zahnkränze übertragenen Drehmoments auf die Zahnkränze. Das Lastaufteilungsmittel ist dazu geeignet, ein durch das Getriebe übertragenes Drehmoment auf die Zahnkränze aufzuteilen. Besonders bevorzugt wird, dass das Lastaufteilungsmittel dazu geeignet ist, das Drehmoment derart auf die Zahnkränze aufzuteilen, dass bei einem bestimmten Arbeitspunkt alle Zahnkränze im Wesentlichen gleich belastet sind. Vorteilhafterweise sind hierzu das Hohlrad, die Zahnkränze, die Kurvenscheiben oder die Innenwelle ausgebildet, so dass bei einem bestimmten Arbeitspunkt das durch das Getriebe übertragene Drehmoment im Wesentlichen gleichmäßig auf die Zahnkränze aufgeteilt wird. Der Arbeitspunkt ist vorzugsweise ein maximales durch das Getriebe dauerhaft übertragbares Drehmoment oder ein Drehmoment von mindestens 50% oder mindestens 70% des maximal übertragbaren Drehmoments. Dies bietet den Vorteil, dass das Getriebe optimal ausgenutzt werden kann. Auf diese Weise können länglich ausgebildete Getriebe, die für besondere Einbausituationen geeignet sind, gestaltet werden, welche ausserdem bei einem großen Übersetzungsverhältnis große Drehmomente übertragen können. Bei typischen Ausführungsformen ist das Lastaufteilungsmittel dazu vorgesehen, einer ungleichmäßigen Verteilung der Last auf die Zahnkränze auf Grund von Verformungen des Getriebes unter Last entgegenzuwirken. Verformungen des Getriebes betreffen insbesondere eine Torsion der Innenwelle, eine Torsion des Zahnträgers oder des Hohlrades. Bevorzugte Ausführungsformen weisen Lastaufteilungsmittel auf, welches bei Torsionsverformung der Innenwelle, des Zahnträgers oder des Hohlrades unter Last eine Vergleichmäßigung der Lastaufteilung auf die Zahnkränze erreicht.

Vorzugsweise ist die Länge des Getriebes in Achsrichtung der Innenwelle grösser als der Außendurchmesser des Hohlrades. Ein solches Getriebe ist besonders für beengte Einbausituationen geeignet. Besonders bevorzugt werden Getriebe, bei denen die Länge des Getriebes doppelt so lang ist wie der Außendurchmesser des Hohlrades. Dabei bezeichnet die Länge des Getriebes vorzugsweise die Länge zwischen den Außenflanken der außen liegenden Zahnkränze. Bevorzugte Getriebe weisen zumindest zwei Zahnkränze auf, wobei besonders bevorzugte Getriebe mindestens drei oder mindestens vier Zahnkränze umfassen.

Vorzugsweise sind entweder der Zahnträger mit einem feststehenden Widerlager und das Hohlrad mit einer Abtriebswelle gekoppelt oder der Zahnträger mit einer Abtriebswelle und das Hohlrad mit einem feststehenden Widerlager gekoppelt. Auf diese Weise werden große Übersetzungen erreicht

Vorzugsweise umfasst das Lastaufteilungsmittel eine Kopplung der Abtriebswelle an einem ersten Ende des Getriebes und eine Kopplung des Widerlagers an einem dem ersten Ende gegenüberliegenden zweiten Ende des Getriebes. Durch die gegenüberliegende Kopplung der Abtriebswelle einerseits und des Widerlagers andererseits wird erreicht, dass sich die beiden Torsionswinkel des Zahnträgers und des Hohlrades, die mit der Abtriebswelle oder dem Widerlager gekoppelt sind, zumindest teilweise aufheben.

Vorteilhafterweise weisen der Zahnträger und das Hohlrad Torsionssteifigkeiten auf, die sich um weniger als den Faktor 4 unterscheiden. Besonders bevorzugt wird ein Unterschied durch einen Faktor von weniger als 2 und noch bevorzugter von weniger als 1,5. Besonders bevorzugt wird, dass der Unterschied der Torsionssteifigkeiten des Hohlrads einerseits und der Innenwelle oder des Zahnträgers andererseits kleiner ist als 4, 2, 1,5 oder am bevorzugtesten 1,2. Vorzugsweise weisen Hohlrad und Zahnträger ähnliche Steifigkeit auf, da hier jeweils die Last angreift. Die Innenwelle weist vorzugsweise eine mit der jeweiligen Übersetzung abgestimmte Steifigkeit auf. Anzumerken ist, dass die Innenwelle auf der Antriebsseite ein wesentlich geringeres Drehmoment übertragen muss, so dass die Torsionssteifigkeit der Innenwelle geringer sein kann als die des Hohlrades oder des Zahnträgers.

Auf diese Weise wird erreicht, dass eine Verdrehung unter Last zumindest im Wesentlichen ähnlich ist, so dass eine Aufteilung des übertragenen Drehmoments auf die Zahnkränze möglichst gleichmäßig erfolgt. Darüber hinaus hat diese Ausführungsform den besonderen Vorteil, dass die Aufteilung unabhängig von der absoluten Höhe des Drehmoments auch bei beispielsweise 20% des maximal übertragbaren Drehmoments funktioniert sowie unabhängig von der Lastrichtung ist.

Vorteilhafterweise weisen die erste Kurvenscheibe und die zweite Kurvenscheibe jeweils zumindest ein Abstandsmaximum auf, wobei das Lastaufteilungsmittel einen Verdrehwinkel der Abstandsmaxima der Kurvenscheiben bezüglich der Längsachse der Innenwelle umfasst. Der Abstand des Abstandsmaximums bezieht sich in dieser Anmeldung auf eine Rotationsachse der Kurvenscheiben. Bei mehr als zwei Kurvenscheiben sind vorzugsweise zwei jeweils benachbarte Kurvenscheiben gegeneinander verdreht, d. h. ihre jeweiligen Abstandsmaxima sind gegeneinander verdreht. Soweit von einem Verdrehwinkel gesprochen wird, ist ein Verdrehwinkel ungleich 0° gemeint. Vorzugsweise ist der Verdrehwinkel so gewählt, dass sich bei einem vorher bestimmten Lastpunkt und Lastrichtung eine zumindest im Wesentlichen gleichmäßige Lastaufteilung auf die Zahnkränze ergibt. Der Lastpunkt ist vorzugsweise eine Maximallast des Getriebes. Je nach Aufbau des Getriebes ergeben sich unterschiedliche Verdrehwinkel.

Bevorzugt ist der Verdrehwinkel zweier benachbarter Kurvenscheiben derart, dass im unbelasteten Zustand des Getriebes zumindest einer der Zahnkränze außermittig mit der Innenverzahnung in Eingriff ist. Dabei sind die Kurvenscheiben bevorzugt um maximal 1 ° gegeneinander verdreht. Auf diese Weise wird einer Verdrehung der Komponenten entlang des Getriebes unter Last Rechnung getragen. Auf diese Weise wird eine gleichmäßige Lastaufteilung entlang der Längsachse des Getriebes erreicht.

Bei typischen Ausführungsformen ist zumindest eine der Kurvenscheiben so angeordnet, dass bei einem Leerlauf des Getriebes, d.h. ohne Last, die Zähne des Zahnkranzes dieser Kurvenscheibe versetzt oder außermittig in die Innenverzahnung eingreifen. Dabei bedeutet versetzt, dass der Zahn, welcher über dem Abstandsmaximum der Kurvenscheibe ist, nicht zentriert bezüglich der entsprechenden Zahnlücke der Innenverzahnung ist. Dies kann durch die oben beschriebene Verdrehung der Kurvenscheiben gegeneinander bei durchgehender Innenverzahnung erreicht werden. Eine weitere Möglichkeit ist, einen größeren Verdrehwinkel, welcher einem Vielfachen des Zahnwinkels entspricht, mit der Verdrehung zum Erreichen des Versatzes der Verzahnung zu überlagern.

Vorteilhafterweise beträgt der Verdrehwinkel jeweils zweier benachbarter Kurvenscheiben zumindest im wesentlichen 45°, 60°, 90°, 120° oder 180°. Dabei bedeutet "im wesentlichen", dass zusätzlich der oben beschriebene Versatz der Verzahnung vorgesehen sein kann. Besonders bevorzugt sind mehrere Kurvenscheiben hintereinander jeweils im Wechsel angeordnet. Dabei bedeutet im Wechsel, dass beispielsweise ellipsenförmige Kurvenscheiben jeweils um 90° gegeneinander verdreht sind. Bei Kurvenscheiben mit lediglich einer Nocke wird eine Verdrehung um 120° gegeneinander oder 180° gegeneinander bevorzugt, wobei andere Ausführungsformen möglich sind. Dies bietet den Vorteil einer gleichmäßigen Aufteilung der Last über die Länge und den Umfang der Innenwelle und des Hohlrads.

Das Lastaufteilungsmittel sieht ein unterschiedliches Spiel der ersten Zähne und der zweiten Zähne vor. Insbesondere bei mehr als zwei Zahnkränzen entspricht das Spiel zumindest im Wesentlichen einem lastabhängigen Verlauf bei Belastung des Getriebes. Der Verlauf ist vorzugsweise kurvenförmig, besonders bevorzugt parabelförmig, mit einem Minimum des Spiels in der Mitte der Längsachse des Getriebes. Das größere Spiel bewirkt, dass der entsprechende Zahnkranz geringer belastet wird. Beim Betrieb eines erfindungsgemäßen Getriebes ergeben sich an den Rändern größere Belastungen der Zahnkränze als in der Mitte. Um eine gleichmäßige Aufteilung auf alle Zahnreihen über die Längsachse des Getriebes zu erzielen, sieht das Lastaufteilungsmittel deshalb vor, das Spiel der Zahnreihen entsprechend der Belastung zu variieren, womit die Zähne an den Enden des Getriebes ein größeres voreingestelltes Spiel bekommen als die Zähne in der Mitte. Das Spiel der Zahnreihen entspricht somit einem vorzugsweise parabelförmigen/kurvenförmigen Verlauf.

Um ein unterschiedliches Spiel der ersten Zähne und der zweiten Zähne zu erreichen, weisen die Kurvenscheiben unterschiedliche Abstandsmaxima, die ersten Zähne und die zweiten Zähne unterschiedliche Längen und/oder Ringsegmente des ersten und des zweiten Zahnkranzes unterschiedliche Dicken auf. Es wird allgemein bevorzugt, dass bei mehr als zwei in Reihe hintereinander angeordneten Zahnkränzen das jeweilige Spiel der Zahnkränze einen parabelförmigen Verlauf nimmt. Dies ermöglicht eine gleichmäßige Belastung bei einem bestimmten Lastpunkt. Diese Ausführungsformen bieten den Vorteil, unabhängig von der Lastrichtung, d.h. der Drehrichtung, eine Aufteilung auf die Zahnkränze zu ermöglichen.

Um ein Verbiegen des relativ langen Getriebes im Betrieb zu ermöglichen, ist in einer bevorzugten Ausführungsform die Innenwelle oder das Hohlrad ausgebildet, so dass sie in einem Radius von unter 100 Metern im Betrieb biegsam sind, noch bevorzugter maximal 50 Meter und noch bevorzugter maximal 30 Meter. Bei feststehend ausgeführtem Hohlrad kann das Hohlrad feststehend gekrümmt sein oder es können formschlüssige Verbindungen mit entsprechendem Spiel vorgesehen sein. Eine axiale Biegung des Getriebes ohne Verwendung von Gelenken mit Lastaufteilung auf die Zahnkränze ist möglich durch die Variation des Spieles der Zahnkränze.

### Kurze Beschreibung der Zeichnungen

Weitere Vorteile und Merkmale bevorzugter Ausführungsformen der Erfindung werden nachfolgend anhand der beiliegenden Zeichnungen erläutert, wobei die Figuren zeigen:
- Figur 1: zeigt in einer schematischen Schnittansicht eine erfindungsgemässe Ausführungsform eines Getriebes;
- Figur 2a: zeigt schematisch einen erfindungsgemässen Versatz von Zahnkränzen auf einer Innenwelle;
- Figur 2b: zeigt eine erfindungsgemässe Anordnung verschiedener Kurvenscheiben relativ zueinander;
- Figur 3a: zeigt eine weitere erfindungsgemässe Möglichkeit zur Anordnung von Kurvenscheiben schematisch in einer Ansicht;
- Figur 3b: zeigt in einer perspektivischen schematischen Skizze die Lastverteilung am Hohlrad mit einer Anordnung der Kurvenscheiben gemäß Figur 3a;
- Figur 4a: zeigt eine weitere erfindungsgemässe Anordnung von Kurvenscheiben schematisch;
- Figur 4b: zeigt die Lastverteilung am Hohlrad bei einer Anordnung der Kurvenscheiben gemäß Figur 4a in einer schematischen perspektivischen Ansicht; und
- Figur 5: zeigt schematisch in einer Schnittansicht den erfindungsgemässen Unterschied zweier Kurvenscheiben, zweier Arten von Zähnen oder zweier Arten von Schwenksegmenten in einer schematischen Schnittansicht.

### Beschreibung bevorzugter Ausführungsbeispiele

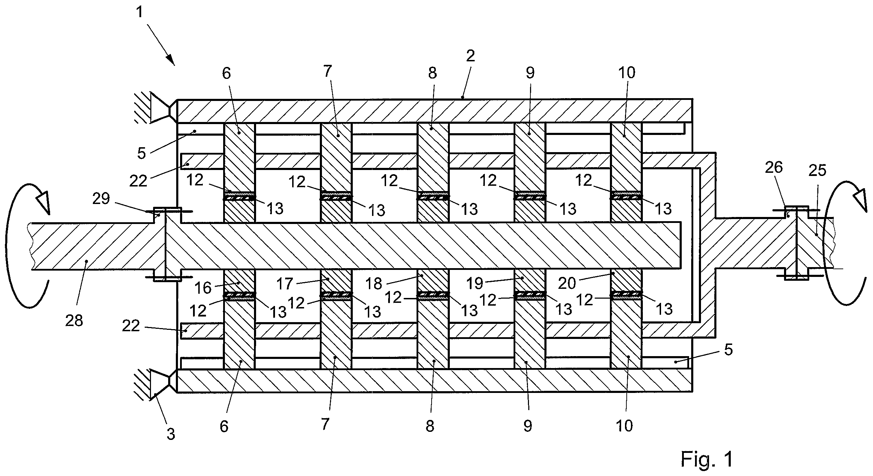

In der Figur 1 ist in einer schematischen Schnittansicht eine bevorzugte Ausführungsform eines erfindungsgemässen Getriebes gezeigt. Bei der Beschreibung der Figuren 1 bis 5 werden einheitliche Bezugszeichen für gleiche oder ähnliche Teile verwendet und in den einzelnen Figuren und Beschreibungen unter Umständen nicht noch einmal vollständig erläutert.

In der Figur 1 ist ein erfindungsgemässes Getriebe 1 gezeigt, wobei das Getriebe ein außen liegendes Hohlrad 2 umfasst, welches durch ein feststehendes Widerlager 3 fixiert ist. Das Widerlager 3 greift an mehreren Stellen des Umfangs des Hohlrades 2 an einem Ende des Getriebes an.

Das Hohlrad 2 weist eine Innenverzahnung 5 auf, in welche erste Zähne 6 eines ersten Zahnkranzes und zweite Zähne 7 eines zweiten Zahnkranzes eingreifen. Weiterhin greifen Zähne 8 bis 10 von weiteren Zahnkränzen in die Innenverzahnung 5 ein. Die Zähne 6 bis 10 lagern radial innen jeweils auf einem flexiblen Ring 12, welcher über Walzen 13 jeweils auf Kurvenscheiben 16 bis 20 gelagert ist. Bei der folgenden Beschreibung wird insbesondere auf die erste Kurvenscheibe 16 und die zweite Kurvenscheibe 17 eingegangen. Alle Kurvenscheiben 16 bis 20 sind drehfest auf einer Innenwelle 21 angeordnet.

Die Kurvenscheiben 16 bis 20 weisen einen in Umfangsrichtung veränderlichen Radius auf, so dass bei einer Drehung der Innenwelle 21 die Zähne 6 bis 10 jeweils bei bestimmten Stellungen der Innenwelle 21 nach außen in die Innenverzahnung 5 des Hohlrades 2 eingetrieben werden. Durch eine unterschiedliche Beabstandung der Zähne 6 bis 10 und der Innenverzahnung 5 wird erreicht, dass über den gesamten Umfang beispielsweise 50 Zähne des Zahnkranzes und 51 Zahnlücken der Innenverzahnung 5 angeordnet sind. Zur weiteren Beschreibung und Erläuterung dieser Art von Getrieben wird auf die DE 10 2006 042 786 B4 verwiesen.

Bei dem Getriebe 1 der Figur 1 sind die einzelnen Zahnkränze mit den Zähnen 6 bis 10 und die Innenverzahnung 5 an jeder Stelle der einzelnen Zähnkränze identisch aufgebaut. Auf diese Weise wird über die Zahnkränze mit den Zähnen 6 bis 10 parallel ein Drehmoment von der Innenwelle 21 auf die Zähne 6 bis 10 übertragen, wobei eine große Übersetzung erreicht wird.

Die Zähne 6 bis 10 der fünf Zahnkränze sind in einem gemeinsamen Zahnträger 22 angeordnet, in welchem die Zähne 6 bis 10 jeweils derart gelagert sind, dass sie sich in radialer Richtung bewegen können.

Das Getriebe 1 der Figur 1 wird am linken Ende durch eine Antriebswelle 28 angetrieben. Die Antriebswelle 28 ist über einen Antriebsflansch 29 mit der Innenwelle 21 drehfest verbunden oder gekoppelt. Am anderen, rechten Ende des Getriebes 1 ist der Zahnträger 22 drehfest mit einer Abtriebswelle 25 durch einen Abtriebsflansch 26 verbunden oder gekoppelt. Ein Widerlager 3 legt das Hohlrad am linken Ende des Getriebes fest.

Die gezeigte Konstellation mit jeweils 24 Zähnen 6 bis 10, welche durch identisch ausgebildete und mit gleicher Winkellage auf der Innenwelle 21 angeordneten Kurvenscheiben 16 bis 20 zusammenwirken, bewirkt, dass über die einzelnen Zähne 6 bis 10 jeweils etwa das gleiche Moment übertragen wird. Der Grund ist, dass eine Verformung des Zahnträgers 22, der im Wesentlichen dieselbe Verdrehsteifigkeit wie das Hohlrad 2 aufweist, eine etwa gleiche Torsion dieser beiden Teile erreicht wird, so dass die Last gleichmäßig aufgeteilt wird.

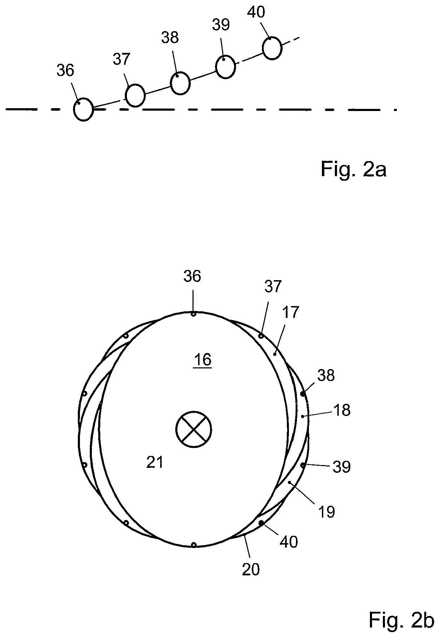

In den Figuren 2a und 2b ist schematisch ein weiteres Ausgleichsmittel von erfindungsgemässen Getrieben gezeigt. Das Ausführungsbeispiel der Figuren 2a und 2b ist nicht noch einmal vollständig gezeigt, wobei daher auf die Figurenbeschreibung und die Figur 1 verwiesen wird. Im Unterschied zu dem Ausführungsbeispiel der Figur 1 ist bei dem Ausführungsbeispiel der Figuren 2a und 2b ein Winkelversatz der einzelnen Kurvenscheiben zueinander vorgesehen. Dabei ist eine nachfolgende Kurvenscheibe gegenüber der vorhergehenden Kurvenscheibe jeweils um einen Winkel verdreht. Das Hohlrad kann wie bei Figur 1 gegenüber des Abtriebs oder auch durchgehend festgelegt sein.. In der Figur 2a ist gezeigt, wie sich das jeweilige Abstandsmaximum der Kurvenscheiben um einen Winkel verschiebt. Der Winkel ist kleiner als der Winkelabstand zweier Zahnlücken. Bei einem Eingriff in einer Hohlwelle mit einer durchgehenden, gleich bleibenden Innenverzahnung wird auf diese Weise erreicht, dass bei einem Lastpunkt, für welchen die jeweilige Verdrehung berechnet ist, alle Zahnkränze in etwa das gleiche Moment übertragen. Die Torsion des Zahnkäfigs und des Hohlrades gleichen den Winkelversatz aus.

Es sollte angemerkt werden, dass ohne Last oder bei sehr geringer Last die Zähne zumindest einiger der Zahnkränze "schief" in die Zahnlücken eingreifen, da der Ausgleich durch Torsion unter Last entfällt. "Schief" bedeutet dabei, dass die Mittenachse des Zahns nicht mit der Mittenachse der Zahnlücke übereinstimmt. Im unbelasteten Zustand greifen dabei jedoch zumindest die Zähne eines der Zahnkränze außermittig, d.h. um einen Winkel, der kleiner als der Winkelabstand der Zahnlücken ist, verschoben, in die Innenverzahnung ein.

Durch Verschiebung der Maximalpunkte wird nun erreicht, dass die Last bei einem berechneten Lastpunkt, vorzugsweise der dauerhaften Maximallast des Getriebes, in etwa gleich aufgeteilt wird. In der Figur 2a ist nun schematisch die relative Lage der Abstandsmaxima 36 bis 40 relativ zu der Winkellage des Abstandsmaximums 36 der Kurvenscheibe 16 gezeigt. Die Abstandsmaxima 37 bis 40 gehören jeweils zu den Kurvenscheiben 17 bis 20. In der Figur 2 ist schematisch in einer Draufsicht in Achsrichtung die Lage der Abstandsmaxima 36 bis 40 der Kurvenscheiben 16 bis 20 stark übertrieben dargestellt.

Eine weitere Möglichkeit ist ein Versatz der Innenverzahnung der jeweiligen Zahnkränze in dem Hohlrad. Auch dies kann als Lastaufteilungsmittel verwendet werden, um die Last bei einer bestimmten Belastung des Getriebes auf die Zahnkränze aufzuteilen.

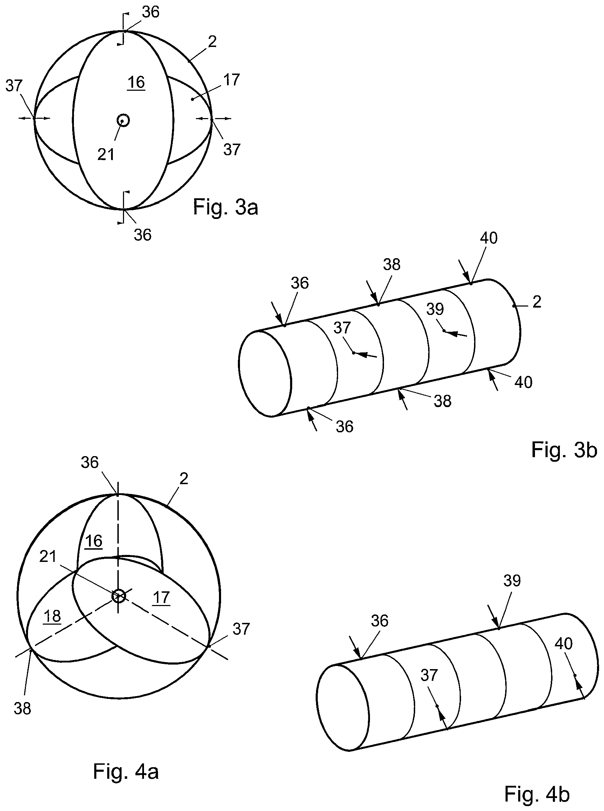

Die Figuren 3 und 4 zeigen verschiedene Konstellationen eines weiteren Lastaufteilungsmittels für erfindungsgemässe Getriebe. Dabei wird wiederum auf die Figurenbeschreibung der Figur 1 Bezug genommen, wobei im Folgenden hauptsächlich die Unterschiede zu dem Ausführungsbeispiel der Figur 1 dargelegt werden.

Die Figuren 3 und 4 zeigen, wie durch eine Winkel-Verteilung der Abstandsmaxima der Kurvenscheiben auf der Innenwelle erreicht werden kann, eine Gesamtverformung des Hohlrades oder der Innenwelle möglichst gering zu halten und auf diese Weise geringe Wandstärken zu verwenden. Auch dies hilft, bei minimaler Verformung der betroffenen Bauteile, gleichzeitig ein möglichst schlankes Getriebe zu erschaffen. Dabei bedeutet schlank, dass das Getriebe einen möglichst geringen Durchmesser bei einem großen übertragbaren Maximalmoment aufweist. Diese Getriebe sind besonders für spezielle Einbausituation geeignet, in welchen es auf einen geringen Durchmesser ankommt.

Bei dem in den Figuren 3a und 3b gezeigten Beispiel sind zwei benachbarte Kurvenscheiben 16 und 17 jeweils um 90° verdreht. Auf diese Weise sind die jeweiligen Abstandsmaxima ebenfalls um 90° verdreht. In der Figur 3b ist angedeutet, in welchen Bereichen die Zahneingriffsbereiche oder Abstandsmaxima 36 bis 40 jeweils an dem Hohlrad 2 zu finden sind. Es sollte berücksichtigt werden, dass die Kurvenscheiben 16 bis 20 bei dem Ausführungsbeispiel der Figur 3 jeweils zwei gegenüberliegende Abstandsmaxima aufweisen, d. h. sie sind ellipsenförmig ausgebildet. Durch die Anordnung wird eine gleichmäßige Belastung des Hohlrades 2 und damit eine möglichst geringe Verformung des Hohlrades 2 erreicht. Es sollte betont werden, dass die Möglichkeiten, welche in der Figur 3 und in der Figur 4 gezeigt sind, eine Last möglichst gleichmäßig auf das Hohlrad und die Innenwelle aufzuteilen, beliebig mit den anderen Lastaufteilungsmitteln kombinierbar sind. Ebenso sind selbstverständlich auch die anderen Lastaufteilungsmittel jeweils miteinander kombinierbar, wobei allerdings betont werden sollte, dass beispielsweise mit dem im Zusammenhang mit der Figur 1 erläuterten Lastaufteilungsmittel bereits eine vollständige Lastaufteilung alleine erreicht werden könnte. Dabei ist aber auch bei einer vollständigen Lastaufteilung auf die Zahnkränze von Vorteil, die Last auf das Hohlrad wie in den Figuren 3 und 4 gezeigt aufzuteilen, da sich auf diese Weise noch ein zusätzlicher Vorteil durch die Möglichkeit zur Verwendung geringerer Wandstärken ergibt.

Die Figuren 4a und 4b zeigen eine ähnliche Möglichkeit zur Lastaufteilung wie die Figuren 3a und 3b, wobei die Kurvenscheiben 16 bis 20 bei dem Ausführungsbeispiel der Figuren 4a und 4b jeweils nur eine Nocke oder nur ein Abstandsmaximum 36 bis 40 aufweisen. Die Kurvenscheiben 16 bis 20 sind aufeinander folgend um einen Winkel von 120° verdreht angeordnet. In der perspektivischen Ansicht der Figur 4b ist das Abstandsmaximum 38 nicht gezeigt, da es auf der rückwärtigen Seite bei dieser Darstellung liegt. Die Draufsicht in Achsrichtung der Figur 4a zeigt die Kurvenscheiben 16 bis 18, wobei die Kurvenscheibe 19 wiederum in die Kurvenscheibe 16 und die Kurvenscheibe 20 wiederum in die Kurvenscheibe 17 angeordnet ist.

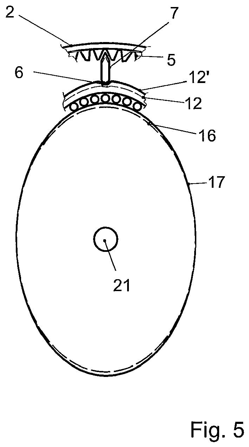

In der Figur 5 ist eine weitere Möglichkeit zur Lastaufteilung gezeigt, wobei bei der Figur 5 jeweils zwei Kurvenscheiben, zwei Zähne und zwei Ringsegmente gezeigt sind. Um ein unterschiedliches Spiel an den verschiedenen Zahnkränzen zu erreichen, ist es jedoch ausreichend, lediglich eines der genannten Teile unterschiedlich zu gestalten. Selbstverständlich können auch mehrere der genannten Elemente gleichzeitig unterschiedlich gestaltet sein.

Die erste Kurvenscheibe 16 ist strichliert dargestellt und weist kleinere Abstandsmaxima auf als die zweite Kurvenscheibe 17, welche mit einer durchgezogenen Linie dargestellt ist. Durch die geringeren Radien der ersten Kurvenscheibe 16 wird erreicht, dass die durch die erste Kurvenscheibe 16 angetriebenen ersten Zähne 6 nicht so weit in die Innenverzahnung 5 eingetrieben werden wie die durch die zweite Kurvenscheibe 17 angetriebenen zweiten Zähne 7. Dadurch wird erreicht, dass die ersten Zähne 6 ein größeres Spiel auch in Umfangsrichtung beim Eingriff in die Innenverzahnung 5 aufweisen. Auf diese Weise ist bei einer nur geringen Drehmomentbelastung des Getriebes lediglich der Zahnkranz mit den zweiten Zähnen 7 in Eingriff. Hierbei sollte angemerkt werden, dass die Ausführungsbeispiele der Figur 5 lediglich für zwei Zahnkränze beschrieben werden, wobei hierzu analog auf Figur 1 verwiesen wird. Der Effekt des Spiels ist im Wesentlichen derselbe wie bei dem Versetzen der Zahnreihen für einen außermittigen Eingriff, allerdings mit dem Vorteil, dass der Effekt für beide Lastrichtungen der Momentübertragung gleichermaßen wirkt. Ebenso ist auch ein parabelförmiger Winkelversatz der Kurvenscheiben geeignet, als Lastausgleichsmittel eingesetzt zu werden.

Selbstverständlich ist es möglich, auch die Ausführungsbeispiele der Figur 5 mit beispielsweise fünf oder einer anderen Anzahl von Zahnkränzen auszuführen, um noch höhere Momente zu übertragen. Dabei nimmt das Spiel der Zähne vorzugsweise von der Mitte des Getriebes in axialer Richtung zu den Enden des Getriebes zu. Auf diese Weise wird eine möglichst gleichmäßige Auslastung der einzelnen Zahnkränze bei einem bestimmten Lastpunktes des Getriebes erreicht.

Eine weitere Möglichkeit, ein unterschiedliches Spiel zu erreichen ist, wie dargestellt die ersten Zähne 6 kürzer auszuführen als die zweiten Zähne 7. Auch dadurch wird erreicht, dass das Spiel des ersten Zahnkranzes grösser ist als das Spiel des zweiten Zahnkranzes.

Eine weitere vorteilhafte Möglichkeit ist, die Ringsegmente 12 und 12' unterschiedlich auszuführen. Im Gegensatz zu dem Ausführungsbeispiel der Figur 1 sind die Ringsegmente 12 und 12' nicht identisch aufgebaut sondern weisen eine unterschiedliche Höhe auf. So ist das Ringsegment 12 des ersten Zahnkranzes, welches einen der ersten Zähne 6 anhebt, dünner ausgebildet als das Ringsegment 12' des zweiten Zahnkranzes, welches einen der zweiten Zähne 7 anhebt. Auf diese Weise wird ein größeres Spiel des ersten Zahnkranzes mit den ersten Zähnen 6 erreicht, so dass bei geringer Belastung die Last hauptsächlich durch die zweiten Zähne 7 übertragen wird, jedoch bei höherer Last aufgrund einer Torsion der Innenwelle 21 und des Hohlrads 2 es auch zu einer Belastung der ersten Zähne 6 kommt, da der zweite Zahnkranz durch die Wirkung der Torsion der Last "ausreicht".

## Patentansprüche

1. Getriebe (1), insbesondere einstufiges Getriebe mit einem Übersetzungsverhältnis von mehr als 1 zu 10 mit
- einem Hohlrad (2) mit Innenverzahnung (5),
- einem ersten Zahnkranz mit radial beweglichen ersten Zähnen (6) zum Eingriff in die Innenverzahnung (5),
- einem zweiten Zahnkranz mit radial beweglichen zweiten Zähnen (7) zum Eingriff in die Innenverzahnung (5),
- einer Innenwelle (21), auf welcher eine erste Kurvenscheibe (16) zum radialen Antrieb der ersten Zähne (6) und eine zweite Kurvenscheibe (17) zum radialen Antrieb der zweiten Zähne (7) befestigt ist, und
- einem Lastaufteilungsmittel zum Aufteilen eines über die Zahnkränze übertragenen Drehmomentes auf die Zahnkränze,
**dadurch gekennzeichnet, dass**
- das Lastaufteilungsmittel ein unterschiedliches Spiel der ersten Zähne (6) und der zweiten Zähne (7) vorsieht,
- wobei für das unterschiedliche Spiel der ersten Zähne (6) und der zweiten Zähne (7) die Kurvenscheiben (16- 20) unterschiedliche Abstandsmaxima, die ersten Zähne (6) und die zweiten Zähne (7) unterschiedliche Längen und/oder Ringsegmente (12) des ersten und des zweiten Zahnkranzes unterschiedliche Dicken aufweisen.

2. Getriebe (1) nach Anspruch 1, **gekennzeichnet durch** zumindest einen weiteren Zahnkranz mit weiteren Zähnen (8-10) und zumindest einer auf der Innenwelle (21) angeordneten weiteren Kurvenscheibe (18-20) zum Antrieb der weiteren Zähne (8-10).

3. Getriebe (1) nach Anspruch 1 oder 2, **dadurch gekennzeichnet, dass** die Zähne (6 - 10) der Zahnkränze durch einen Zahnträger (22) gekoppelt sind.

4. Getriebe (1) nach einem der vorhergehenden Ansprüche, **dadurch gekennzeichnet, dass** die Länge des Getriebes (1) in Achsrichtung der Innenwelle größer ist als der Außendurchmesser des Hohlrades (2).

5. Getriebe (1) nach einem der vorhergehenden Ansprüche, **dadurch gekennzeichnet, dass** entweder der Zahnträger (22) mit einem feststehenden Widerlager und das Hohlrad (2) mit einer Abtriebswelle gekoppelt sind oder der Zahnträger (22) mit einer Abtriebswelle (25) und das Hohlrad (2) mit einem feststehenden Widerlager (3) gekoppelt sind.

6. Getriebe (1) nach einem der vorhergehenden Ansprüche, **dadurch gekennzeichnet, dass** das Lastaufteilungsmittel eine Kopplung der Abtriebswelle (26) an einem ersten Ende des Getriebes (1) und eine Kopplung des Widerlagers (3) an einem dem ersten Ende gegenüberliegenden zweiten Ende des Getriebes (1) umfasst.

7. Getriebe (1) nach einem der vorhergehenden Ansprüche, **dadurch gekennzeichnet, dass** der Zahnträger (22) und das Hohlrad (2) Torsionssteifigkeiten aufweisen, die sich um weniger als den Faktor vier unterscheiden.

8. Getriebe (1) nach einem der vorhergehenden Ansprüche, **dadurch gekennzeichnet, dass** die erste Kurvenscheibe (16) und die zweite Kurvenscheibe (17) jeweils zumindest ein Abstandsmaximum bezüglich einer Rotationsache der Kurvenscheiben (16, 17) aufweisen, wobei das Lastaufteilungsmittel einen Verdrehwinkel der Abstandsmaxima der Kurvenscheiben (16, 17) bezüglich der Längsachse der Innenwelle (21) umfasst.

9. Getriebe (1) nach Anspruch 8, **dadurch gekennzeichnet, dass** der Verdrehwinkel zweier benachbarter Kurvenscheiben (16 - 20) derart ist, dass im unbelasteten Zustand des Getriebes zumindest einer der Zahnkränze außermittig mit der Innenverzahnung (5) in Eingriff ist.

10. Getriebe (1) nach Anspruch 8 oder 9, **dadurch gekennzeichnet, dass** der Verdrehwinkel jeweils zweier benachbarter Kurvenscheiben (16 - 20) zumindest im Wesentlichen 45°, 60°, 90°, 120° oder 180° beträgt.

## Claims

1. Gearing (1), in particular single-stage gearing having a transmission ratio of greater than 1 to 10, having
- an internal gear (2) with an internal toothing (5),
- a first toothed ring with radially movable first teeth (6) for engaging into the internal toothing (5),
- a second toothed ring with radially movable second teeth (7) for engaging into the internal toothing (5),
- an inner shaft (21) on which is fastened a first cam disk (16) for the radial drive of the first teeth (6) and a second cam disk (17) for the radial drive of the second teeth (7), and
- a load dividing means for dividing a torque transmitted via the toothed rings between the toothed rings,
**characterized in that**
- the load dividing means provides different degrees of play of the first teeth (6) and of the second teeth (7),
- wherein for different degrees of play of the first teeth (6) and of the second teeth (7), the cam disks (16-20) have different spacing maxima, the first teeth (6) and the second teeth (7) have different lengths, and/or ring segments (12) of the first toothed ring and of the second toothed ring have different thicknesses.

2. Gearing (1) according to claim 1, **characterized by** at least one further toothed ring with further teeth (8-10) and at least one further cam disk (18-20), arranged on the inner shaft (21), for driving the further teeth (8-10).

3. Gearing (1) according to claim 1 or 2, **characterized in that** the teeth (6-10) of the toothed rings are coupled by means of a tooth carrier (22).

4. Gearing (1) according to one of the preceding claims, **characterized in that** the length of the gearing (1) in the axial direction of the inner shaft is greater than the outer diameter of the internal gear (2).

5. Gearing (1) according to one of the preceding claims, **characterized in that** either the tooth carrier (22) is coupled to a static counterbearing and the internal gear (2) is coupled to a drive output shaft or the tooth carrier (22) is coupled to a drive output shaft (25) and the internal gear (2) is coupled to a static counterbearing (3).

6. Gearing (1) according to one of the preceding claims, **characterized in that** the load dividing means comprises a coupling of the drive output shaft (26) to a first end of the gearing (1) and a coupling of the counterbearing (3) to a second end, which is opposite the first end, of the gearing (1).

7. Gearing (1) according to one of the preceding claims, **characterized in that** the tooth carrier (22) and the internal gear (2) have torsional rigidities which differ by less than a factor of four.

8. Gearing (1) according to one of the preceding claims, **characterized in that** the first cam disk (16) and the second cam disk (17) each have at least one spacing maximum in relation to an axis of rotation of the cam disks (16, 17), the load dividing means comprising a twist angle of the spacing maxima of the cam disks (16, 17) about the longitudinal axis of the inner shaft (21).

9. Gearing (1) according to claim 8, **characterized in that** the twist angle of two adjacent cam disks (16-20) is such that, in the unloaded state of the gearing, at least one of the toothed rings is eccentrically in engagement with the internal toothing (5).

10. Gearing (1) according to claim 8 or 9, **characterized in that** the twist angle of in each case two adjacent cam disks (16-20) is at least substantially 45°, 60°, 90°, 120° or 180°.

## Revendications

1. Transmission (1), plus particulièrement transmission à un étage avec un rapport de démultiplication de plus de 1 à 10, avec
- une couronne (2) avec une denture interne (5),
- une première couronne dentée avec des premières dents (6) mobiles radialement, destinées à s'engrener avec la denture interne (5),
- une deuxième couronne dentée avec de deuxièmes dents (7) mobiles radialement, destinées à s'engrener avec la denture interne (5),
- un arbre interne (21), sur lequel sont fixés un premier disque de came (16) pour l'entraînement radial des premières dents (6) et un deuxième disque de came (17) pour l'entraînement radial des deuxièmes dents (7) et
- un moyen de répartition de charge pour la répartition d'un couple transmis par l'intermédiaire des couronnes dentées sur les couronnes dentées, **caractérisée en ce que**
- le moyen de répartition de charge prévoit des jeux différents pour les premières dents (6) et les deuxièmes dents (7),
- moyennant quoi, pour les jeux différents des premières dents (6) et les deuxièmes dents (7), les disques de cames (16-20) présentent différents maxima de distance, les premières dents (6) et les deuxièmes dents (7) présentent différentes longueurs et/ou les segments annulaires (12) de la première ou de la deuxième couronne dentée présentent différentes épaisseurs.

2. Transmission (1) selon la revendication 1, **caractérisée par** au moins une autre couronne dentée avec d'autres dents (8-10) et au moins un autre disque de came (18-20) pour l'entraînement des autres dents (8-10), disposé sur l'arbre interne (21).

3. Transmission (1) selon la revendication 1 ou 2, **caractérisée en ce que** les dents (6-10) des couronnes dentées sont couplées par un support de dents (22).

4. Transmission (1) selon l'une des revendications précédentes, **caractérisée en ce que** la longueur de la transmission (1) est supérieure, dans la direction axiale de l'arbre interne, au diamètre extérieur de la couronne (2).

5. Transmission (1) selon l'une des revendications précédentes, **caractérisée en ce que** soit le support de dents (22) est couplé avec un contre-palier fixe et la couronne (2) est couplée avec un arbre de sortie, soit le support de dents (22) est couplé avec un arbre de sortie (25) et la couronne (2) est couplée avec un contre-palier fixe (3).

6. Transmission (1) selon l'une des revendications précédentes, **caractérisée en ce que** le moyen de répartition de charge comprend un couplage de l'arbre de sortie (26) à une première extrémité de la transmission (1) et un couplage du contre-palier (3) à une deuxième extrémité, opposée à la première extrémité, de la transmission (1).

7. Transmission (1) selon l'une des revendications précédentes, **caractérisée en ce que** le support de dents (22) et la couronne (2) présentent des rigidités à la torsion qui se distinguent d'au moins le facteur quatre.

8. Transmission (1) selon l'une des revendications précédentes, **caractérisée en ce que** le premier disque de came (16) et le deuxième disque de came (17) présentent chacun un maximum de distance par rapport à un axe de rotation des disques de cames (16, 17), le moyen de répartition de charge présentant un angle de rotation des maxima de distance des disques de cames (16, 17) par rapport à l'axe longitudinal de l'arbre interne (21).

9. Transmission (1) selon la revendication 8, **caractérisée en ce que** l'angle de rotation de deux disques de cames (16-20) adjacents est tel que, dans l'état sans charge de la transmission, une des couronnes dentées est engrenée de manière excentrée avec la denture interne (5).

10. Transmission (1) selon la revendication 8 ou 9, **caractérisée en ce que** l'angle de rotation de deux disques de cames (16-20) adjacents est au moins globalement de 45°, 60°, 90°, 120° ou 180°.
